# EUROPEAN PATENT SPECIFICATION

(11) **EP 3 522 490 B1**
(45) Date of publication and mention of the grant of the patent: **12.06.2024**
(21) Application number: 19157820.2
(22) Date of filing: 07.08.2012
(51) Int. Cl.: H04W 12/06, H04W 12/02, H04W 12/0471, H04W 12/088, H04L 9/40, H04W 4/80, H04L 41/0806, H04B 5/00, H04M 1/72412

(54) **SECURE MEDIA APPLICATION SETUP USING NFC**
SICHERE MEDIENANWENDUNGSEINRICHTUNG UNTER VERWENDUNG VON NFC
CONFIGURATION D'APPLICATION DE SUPPORT SÉCURISÉ PAR NFC

(30) Priority: 21.12.2011 US 201113332568
(43) Date of publication of application: 07.08.2019
(62) Divisional of application: 12005731.0
(73) Proprietor: Avago Technologies International Sales Pte. Limited, Singapore 768923 (SG)
(72) Inventor: McIntyre, Stephen, Irvine, CA California 92603 (US); Davies, Andy, Corsham, SN13 9GR (GB)
(74) Representative: Bosch Jehle Patentanwaltsgesellschaft mbH

(56) References cited:
- EP-A1- 1 993 301
- EP-A1- 2 280 362
- WO-A1-2005/053228
- WO-A1-2009/112634
- WO-A2-2006/113884
- US-A1- 2008 039 139
- US-A1- 2010 100 596

## Description

### BACKGROUND

### Field of the Invention

The present invention relates generally to near field communications.

### Background Art

Near field communication, or NFC, is a set of short-range wireless technologies, typically requiring a distance of 4 cm or less. NFC generally operates at 13.56 MHz and at rates ranging from about 106 kbit/s to 848 kbit/s. NFC generally involves a reader (or initiator) and a tag (or target); the reader actively generates an RF field that can power a passive tag. This enables NFC tags to be configured so as to have very simple form factors such as tags, stickers, key fobs, or cards that do not require batteries. NFC peer-to-peer communication is of course possible, where both devices are powered. Devices that contain both reader and tag capabilities are often called controllers.

Generally, NFC requires that NFC devices be present within a relatively close proximity to each other so that their corresponding magnetic fields can exchange information. Typically, a first NFC device transmits or generates a magnetic field modulated with the information, such as the credit information or the ticket fare information. This magnetic field inductively couples onto a second NFC device that is proximate to the first NFC device. The second NFC device may respond to the first NFC device by transmitting or generating its own modulated magnetic field and inductively coupling this magnetic field to the first NFC device.

Near Field Communications is currently being added to cell phones and other portable devices for facilitating secure financial transactions. These same portable devices often contain password bearing applications. These applications support media such as Netflix^{®}. Others support social networking such as Facebook^{®} or Twitter^{®}. Once the application is loaded in the phone or other portable device and the password is initially entered, there is no need to reload the password. The same or similar applications are often available on televisions, Blu-ray^{®} Disc (BD) players and set top boxes (STBs), all of which fall within the general category of consumer electronics (CE) devices.

Consumer electronic (CE) devices now come with downloadable applications that will each require configuration. Individual configuration of applications is time consuming and complicated and duplicates often the same work already done on the cell phone, tablet, PC, or all three.

The prior art is known from US2010/100596 A1 which discloses transmitting a user name and a user password from a first mobile device to a second mobile device for use by the second mobile device to establish a connection to a media web site and/or a social networking web site.

It would be useful to be able to program multiple CE devices, such as TVs, DVRs, BD and DVD players with the same personal account information that is already found in smartphones and other portable devices.

### BRIEF SUMMARY OF THE INVENTION

The invention is defined by the independent claims. Preferred embodiments are defined by the dependent claims.

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.
FIG. 1 shows a block diagram of an NFC environment.
FIG. 2 is a flow chart of the process of configuring user names and password on DTV/STB applications.
FIG. 3 is a flowchart of the process for configuring media application content blocking settings.
FIG. 4 is a flowchart of the process for configuring social networking privacy settings.
FIG. 5 is a flowchart of the process of configuring DTV/STB applications for logging in by different users.
FIG. 6 shows an embodiment of a known token ID tag.
FIG. 7 shows an embodiment of a token ID tag of the present invention.

The present invention will be described with reference to the accompanying drawings. Generally, the drawing in which an element first appears is typically indicated by the leftmost digit(s) in the corresponding reference number.

### DETAILED DESCRIPTION

The following Detailed Description refers to the accompanying drawings to illustrate exemplary embodiments consistent with the invention. References in the Detailed Description to "one exemplary embodiment," "an exemplary embodiment," "an example exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the scope of the invention. Therefore, the Detailed Description is not meant to limit the invention. Rather, the scope of the invention is defined only in accordance with the following claims and their equivalents.

Embodiments of the invention may be implemented in hardware, firmware, software, or any combination thereof. The following Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Although the description of the present invention is to be described in terms of NFC, those skilled in the relevant art(s) will recognize that the present invention may be applicable to other communications that use the near field and/or the far field without departing from the scope of the present invention. For example, although the present invention is to be described using NFC capable communication devices, those skilled in the relevant art(s) will recognize that functions of these NFC capable communication devices may be applicable to other communications devices that use the near field and/or the far field without departing from the scope of the present invention.

The present disclosure is directed primarily, but not exclusively, to digital televisions (DTVs), set top boxes (STBs), and other consumer electronic (CE) devices that are manufactured and sold with near field communication (NFC) devices built into them and with built-in access to social networking sites, such as Facebook^{®}, MySpace^{®}, LinkedIn^{®}, and Twitter^{®}, to name but a few of the myriad of social networking sites currently available via Internet access. An extensive, although not necessarily all-inclusive, list of social networking sites can be found in the on-line encyclopedia Wikipedia, under the topic "List of social networking websites." Unless otherwise specifically indicated, references to CE devices, such as DTVs, BD players, and STBs, herein will be to those CE devices that are sold to consumers with the ability to access one or more social networking sites built into them.

The CE devices may also be manufactured and sold with built-in access to media sites, such as, but not limited to, on-line newspapers, retailers, like Amazon.com^{®}, auction sites, such as ebay^{®}, banking sites, etc., e-mail accounts, or any other website that requires a user to log-in with a User ID and password. Unless otherwise specifically indicated, references to CE devices, such as DTVs, BD players, and STBs, herein will be to those CE devices that are sold to consumers with the ability to access one or more media sites built into them. In addition, references to a given social networking site or media site hereafter includes any and all such sites that require log-in with a User ID and password.

It is becoming more common that CE devices are being manufactured and sold with media and social networking capabilities built in. Customers (e.g., end users) often have a number of social networking profiles. They also typically have configured wireless devices, such as local access network (LAN) routers and equivalent devices, with security access passwords or key codes to enable other devices, such as desktop, laptop, notebook, and/or tablet computers, smartphones, digital recording devices, etc., to access the secure wireless LAN routers, and equivalent devices. Logging onto each can be time consuming and it requires that the user know or have ready access to his or her User IDs, passwords and access codes.

Various embodiments of the present invention provide methods and apparatus for NFC-enabled portable devices to store information regarding which social networking accounts a user has, their passwords and user IDs, secure device (e.g., wireless LAN router) access codes, and the like and to interact with a CE device such that when the NFC-enabled portable device is placed next to the CE device, that CE device downloads the necessary information to enable it to connect to social networking sites and to access secure devices, such as wireless LAN routers. The information stored in the NFC-enabled portable device may include User ID, password and access codes encrypted using a secure element feature of NFC-enabled devices. NFC-enabled portable devices may include such devices as smartphones, notebook computers, laptop computers, and/or tablet computers, for example.

When a new CE media device, such as a digital TV (DTV) or a set top box (STB), that is capable of accessing such things as social networking sites and internet sites over a wireless LAN connection, is purchased by a consumer (e.g., end user), NFC provides the means to securely configure all the passwords and user names for applications available both on the DTV or other CE device and the portable device just by touching the portable device to the DTV or other CE device. This provides ease of use and a favorable out of box experience to the consumer without exposing passwords in a way that could be intercepted by a third party.

By making configuration of applications easier, consumers will be more likely to use them in their intended manner. Today consumers who have not memorized all their user names and passwords would have to locate this info and individually enter it for each application. This may take a long time and may cause some consumers to defer or give up on enabling these applications. This disclosure assures that the applications enabled on the new CE device are enabled quickly and easily. Furthermore, where multiple accounts may exist it ensures the same account is being used on the phone and the CE device. Privacy and other settings can also be synchronized. A user today may not remember how these settings were configured on other devices. This ensures that a lack of familiarity with privacy settings options doesn't result in lower security. In the following disclosure, except as otherwise specifically noted, references to DTVs include STBs and other CE devices.

Improvements in manufacturing technologies and digital architecture have resulted in a number of products and product categories that were not previously possible or practical to implement. The emerging developments in the area of Near Field Communication (NFC) circuits, systems and applications is making new products and product categories possible. Products incorporating NFC communication capabilities are sometimes referred to in this field as NFC-enabled. For example, portable phones, smart cards or other electronic products that include NFC communication capabilities are referred to as NFC-enabled. NFC communication allows data to be communicated from a first device to a second device over short distances. Although a strict definition for the range of short distances is not agreed upon in the field, short range for NFC usually is thought of as being less than 4 cm, or within one wavelength of the selected communication frequency.

Various NFC arrangements include a pair of devices in which a first device acts as a "tag" and a second separate device within near-field range of the first device acts as a "reader". In various embodiments of the present invention the first device may be equipped with the circuitry for acting as both a tag and a reader.

As will be described in greater detail below, NFC-enabled devices and applications have utility in at least consumer electronics and industrial products.

In connection with the following illustrative embodiments, it is noted that any reference to a computational platform is intended to include similar computational devices and computers regardless of their form factor or input/output configuration. By way of example, and not limitation, a smartphone is one type of a computational platform.

In one illustrative process in accordance with the present invention, an NFC-enabled device stores information relating to passwords for one or more social networking accounts of a user, and the user's credentials for accessing those social networking accounts. Additionally, or alternatively, the NFC-enabled device may store network keys for wireless local area network (LAN) routers, wireless remote controls, etc. In this embodiment, if the NFC-enabled device is brought within the near-field coupling range of a CE device, such as a TV, which is equipped with corresponding NFC capability, then information stored within the NFC-enabled device is near-field communicated to that CE device. That is, the communication takes place by way of near-field coupling.

In one illustrative embodiment, the password, network key, etc., information, is stored in a portable device, such as a NFC-enabled smartphone or tablet computer. The portable device is then placed next to or in contact with the CE device adjacent the NFC device contained in the CE device. As will be discussed in more detail below, one NFC device (either the one in the portable device or the one in the CE device) operates as a reader, while the other NFC device acts as a tag. The necessary information is then transferred from the portable device to the CE device. The CE device then uses the password, user identification and/or network key information to communicate with the wireless LAN router and/or media and/or social networking sites on the internet, for example.

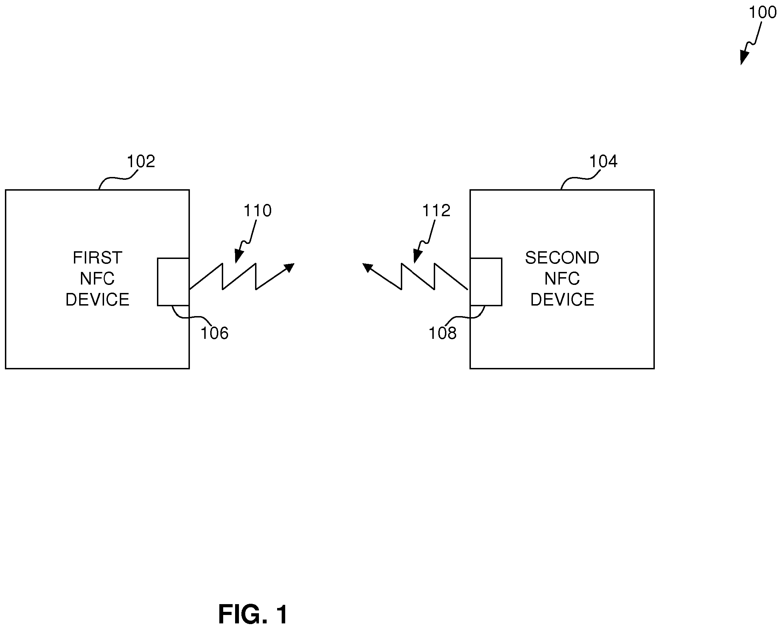

FIG. 1 illustrates a block diagram of a NFC environment 100 according to an exemplary embodiment. NFC environment 100 provides wireless communication of information among a first NFC device 102 and a second NFC device 104 that are closely proximate to each other (typically between 0 cm and 4 cm spacing). The information may include one or more commands to be executed by the first NFC device 102 and/or the second NFC device 104, data from one or more data storage devices that is to be transferred to the first NFC device 102 and/or the second NFC device 104, or any combination thereof. The data storage devices may include one or more contactless transponders, one or more contactless tags, one or more contactless smartcards, or any other machine-readable media that will be apparent to those skilled in the relevant art(s) without departing from scope of the invention, or any combination thereof. The other machine-readable media may include, but are not limited to, read only memory (ROM), random access memory (RAM), magnetic disk storage media, optical storage media, flash memory devices, electrical, optical, acoustical or other forms of propagated signals such as carrier waves, infrared signals, digital signals to provide some examples.

NFC devices 102 and 104 may be any of three types of devices. One type is a tag, or target. A tag is passive. A tag contains data or executes commands. When brought into communication with another device, the tag transfers data and/or commands to the second device. As one example, a tag may be an ID card that permits access to a building when the data stored on the tag is read. A second type is a reader, or initiator. A reader generates an electromagnetic field which is modulated by a tag. An example of a reader may be the unit mounted on the building wall that reads the information stored in the tag. The reader reads data stored on the tag and may take action based on the received information. A controller is a device that incorporates features of both a tag and a reader. A controller typically has more "intelligence" than a tag. That is, a controller may handle more computational and operational functions than a tag. A controller may act as a tag, or a reader, or both. For purposes of the present disclosure, a tag, a reader, and a controller will be referred to herein individually and collectively as a "NFC device."

The first NFC device 102 and/or the second NFC device 104 may be implemented as a standalone or a discrete device or may be incorporated within or coupled to larger electrical devices or host devices such as portable telephones, portable computing devices, other computing devices such as personal, laptop, tablet, or desktop computers, computer peripherals such as printers, portable audio and/or video players, television receivers, a payment system, ticket writing systems such as parking ticketing systems, bus ticketing systems, train ticketing systems or entrance ticketing systems to provide some examples, or in ticket reading systems, toys, games, posters, packaging, advertising materials, product inventory checking systems and/or any other suitable electronic device that will be apparent to those skilled in the relevant art(s) without departing from the scope of the invention.

The first NFC device 102 and/or the second NFC device 104 interact with each other to exchange information such as data and/or one or more commands to be executed by the first NFC device 102 and/or the second NFC device 104. Each NFC device 102 and 104 contains an antenna 106 and 108, respectively, to enable NFC devices 102 and 104 to communicate with each other. One example of such communications is a peer (P2P) communications mode or a reader/writer (R/W) communications mode. In the P2P communications mode, the first NFC device 102 and the second NFC device 104 may be configured to operate according to an active communications mode and/or a passive communications mode. The first NFC device 102 modulates first information onto a first carrier wave, referred to as a modulated data communication, and generates a first magnetic field by applying the modulated data communications to the first antenna 106 to provide a first data communications 110. The first NFC device 102 ceases to generate the first magnetic field after transferring the first information to the second NFC device 104 in the active communications mode via the second antenna 108. Alternatively, in the passive communications mode, the first NFC device 102 continues to apply the first carrier wave without the first information, referred to as an unmodulated data communication, to continue to provide the first data communications 110 once the first information has been transferred to the second NFC device 104.

In the P2P communication mode, the first NFC device 102 is sufficiently proximate to the second NFC device 104 that the first data communications 110 is inductively coupled onto the second antenna 108 of the second NFC device 104. The second NFC device 104 demodulates the first data communications 110 to recover the first information. The second NFC device 104 may respond to the first information by modulating second information onto a second carrier wave and generating a second magnetic field by applying this modulated data communications to the second antenna 108 to provide a second modulated data communications 112 in the active communications mode. Alternatively, the second NFC device 104 may respond to the first information by modulating the first carrier wave that is inductively coupled onto the second antenna 108 with the second information to provide the second modulated data communications 112 in the passive communications mode.

In the R/W communications mode, the first NFC device 102 is configured to operate in an initiator, or reader, mode and the second NFC device 102 is configured to operate in a target, or tag, mode. This example is not limiting. Those skilled in the relevant art(s) will recognize that the first NFC device 102 may be configured to operate in the tag mode and the second NFC device 104 may be configured to operate in the reader mode in accordance with the teachings herein without departing from the spirit and scope of the present invention. The first NFC device 102 modulates the first information onto the first carrier wave and generates the first magnetic field by applying the modulated data communications to the first antenna 106 to provide the first data communications 110. The first NFC device 102 continues to apply the first carrier wave without the first information to continue to provide the first data communications 110 once the first information has been transferred to the second NFC device 104. The first NFC device 102 is sufficiently proximate to the second NFC device 104 that the first data communications 110 is inductively coupled onto the second antenna 108 of the second NFC device 104.

The second NFC device 104 derives or harvests power from the first data communications 110 to recover, to process, and/or to provide a response to the first information. The second NFC device 104 demodulates the first data communications 110 to recover the first information. The second NFC device 104 processes the first information. The second NFC device 104 may respond to the first information by modulating the second information onto the second carrier wave and generating the second magnetic field by applying this modulated data communications to the second antenna 108 to provide the second modulated data communications 112.

Further operations of the first NFC device 102 and/or the second NFC device 104 may be described in International Standard ISO/IE 18092:2004(E), "Information Technology - Telecommunications and Information Exchange Between Systems - Near Field Communication - Interface and Protocol (NFCIP-1)," published on April 1, 2004 and International Standard ISO/IE 21481:2005(E), "Information Technology - Telecommunications and Information Exchange Between Systems - Near Field Communication - Interface and Protocol -2 (NFCIP-2)," published on January 15, 2005, each of which is incorporated by reference herein in its entirety.

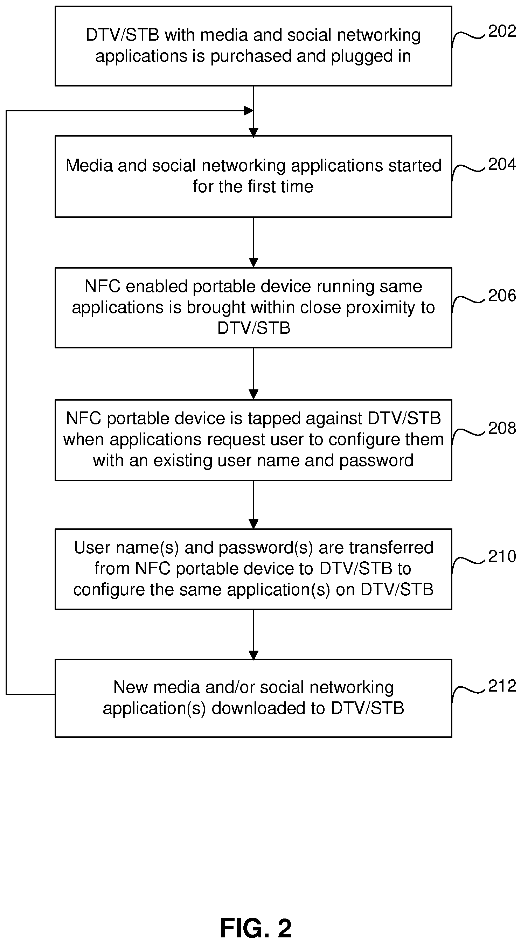

FIG. 2 is a flowchart of the process for initially configuring a new CE device, such as a digital TV (DTV) or set top box (STB). At step 202, a CE device acquired by a customer (end user) is plugged into a power source and activated. At step 204, the end user initiates one or more of the media and social networking applications that are built in to the CE device software. When first initiated, the media or social networking application will likely request that the user enter a User ID and Password. Not uncommonly, the user will not recall their User ID or password for a given media or social networking application.

In accordance with the principles of the present invention, the necessary User IDs and passwords for the various media and social networking websites that are regularly accessed by the user can be stored in a portable device, such as a smartphone, or a laptop, notebook, or tablet computer which has NFC capability built into it, and which run the media and social networking applications. At step 206, the portable device is brought within close proximity to the CE device. One NFC device acts as a reader; the other NFC device acts as a tag. It is unimportant which NFC device acts as a reader and which acts as a tag, although the typical scenario is that the NFC device contained in the portable device acts as a tag, since the tag is not required to be connected to a power source to activate it. The tag harvests its power from the reader. The reader is typically located in the CE device, which is always connected to a power source.

Once the CE device initiates the media and/or social networking applications, the CE device requests the user to enter the user's existing User ID and password. The request is typically displayed on the CE device screen. At step 208, the portable device is brought into contact with the CE device such that the NFC devices can interact with each other.

At step 210, using NFC, the User ID and password information stored on the portable device is transferred to the CE device. The User ID and password information for each media website and social networking website regularly accessed by the user on his/her portable device can be transferred in bulk to the CE device at one time. Alternatively, the User ID and password information for each media website and/or social networking site can be transferred independently each time that a given application is first initiated on the CE device.

By way of example, suppose a consumer purchases a new DTV that has NFC capability and comes pre-loaded with access to Netflix and Facebook. The first time the consumer attempts to access Netflix on the new DTV, a screen may appear requesting the user to either set up a new account or to sign in with his/her User ID and password. The user will have this information stored on their portable device, such as a tablet computer or smartphone, through which they already access their Netflix account. It is also likely that the user will not have their User ID and password for their Netflix account readily available. But it is likely they will have their portable device within reach. If the portable device is NFC capable, that is, it has a NFC device built into it, the user holds the portable device next to the DTV at the point where the two NFC devices are able to "talk" to each other. The user's Netflix account information, including their User ID and password, is transferred from the portable device to the DTV with no further input from the user being needed.

In the same way, when the user wants to access his/her Facebook account on the DTV, the first time, the user calls up the application, a screen will likely appear requesting either that the user set up a new account or log in to their existing account. Again, if the user's portable device is NFC capable, the user touches their portable device to the DTV where the NFC device is located. The user's Facebook account information, including their User ID and password is transferred from the portable device to the DTV with no further input from the user being needed.

In the above examples, the User ID and password information is transferred from the portable device to the DTV as an application is first opened. In another embodiment, all of the User ID and password information for all media and social networking applications that is stored on the portable device is transferred at one time to the DTV. The DTV then applies the User ID and password information that is relevant to a given media or social networking application as that application is initiated.

In a still further example, the CE device may display a list of media and/or social networking sites that are available to be accessed. The user may be given the option to select one or more sites from the displayed list. When the portable device is brought into proximity with the CE device, user ID and password information related to the selected sites is transferred to the CE device and is applied to the selected applications as the selected applications are initiated.

In both above examples, once the relevant User ID and password information has been transferred to the DTV from the portable device via the respective NFC devices in the portable device and the DTV, the applications apply the appropriate User ID and password information to enable the applications to access the applicable media and social networking websites.

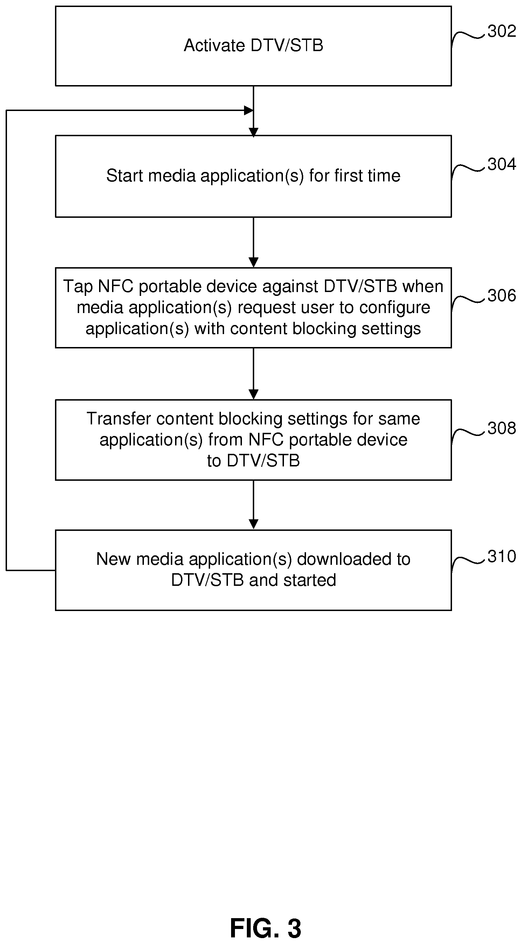

FIG. 3 is a flowchart of the process for initially configuring a DTV (or other CE device) with content blocking information. At step 302, a DTV (or other CE device) acquired by a customer (end user) is plugged into a power source and activated. At step 304, the end user initiates (or opens) one or more of the media applications that are built in to the DTV software for the first time. When first initiated, the media application will likely request that the user enter a User ID and Password. This information can be transferred from the portable device to the DTV (or STB or other CE device) via the NFC devices contained in the DTV and the portable device as described above.

Once the User ID and password information has been transferred from the portable device to the DTV, at step 306 the media application will then likely request that the user configure the application with filters, such as, but not limited to, parental filters, to block certain content, such as, but not limited to, adult or pornographic content, from being displayed. At step 308, the same content blocking (or filtering) settings that are on the portable device are transferred to the DTV using NFC techniques as described above.

At step 310, as new media applications that are currently available on the portable device are downloaded to the DTV (or other CE device), the same procedure is followed to transfer User ID, password information, and content blocking filters from the portable device to the DTV (or other CE device).

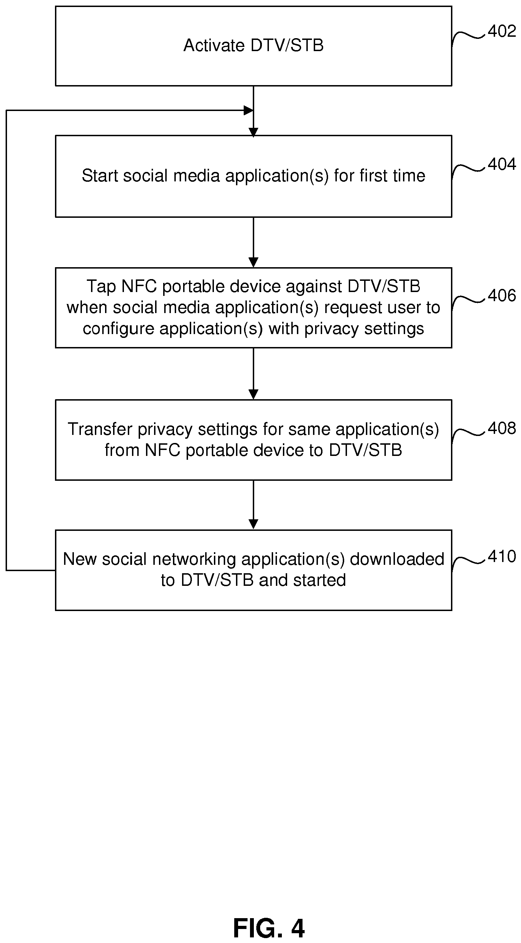

FIG. 4 is a flowchart of the process for initially configuring a DTV (or other CE device) with privacy settings for social networking applications. At step 402, a DTV (or other CE device) acquired by a customer (end user) is plugged into a power source and activated. At step 404, the end user initiates (or opens) one or more of the social networking applications that are built in to the DTV software for the first time. When first initiated, the social networking application will likely request that the user enter a User ID and Password. This information can be transferred from the portable device to the DTV (or STB or other CE device) via the NFC devices contained in the DTV and the portable device as described above.

Once the User ID and password information has been transferred from the portable device to the DTV, at step 406 the media application will then likely request that the user configure the application with privacy settings. At step 408, the same privacy settings that are on the portable device are transferred to the DTV using NFC techniques, as described above.

At step 410, as new social networking applications that are currently available on the portable device are downloaded to the DTV (or other CE device), the same procedure is followed to transfer User ID, password information, and privacy settings from the portable device to the DTV (or other CE device).

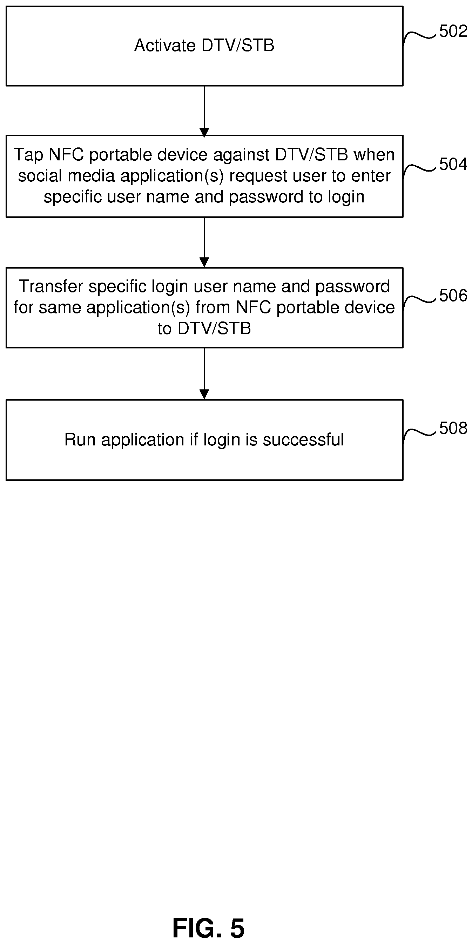

FIG. 5 is a flowchart of the process for logging in to the same application on a DTV (or other CE device) by different users (e.g., different family members), each having different log in information. At step 502, a media or social networking application is launched on the DTV (or other CE device). At step 504, the application requests the user to enter his/her User ID and password to log in. A portable device used exclusively by that user and containing only that user's log in information is brought into proximity with the DTV (or other CE device). At step 506, that user's log in information is transferred from the portable device to the DTV (or other CE device) using NFC techniques, as described above. At step 508, if the log in is successful, the application runs. If log in is not successful, the application may continue to request the proper log in information until it is turned off.

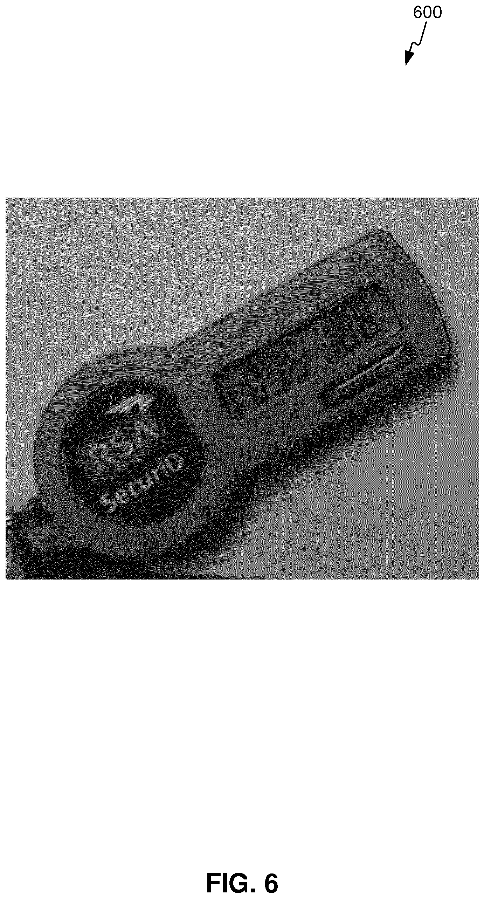

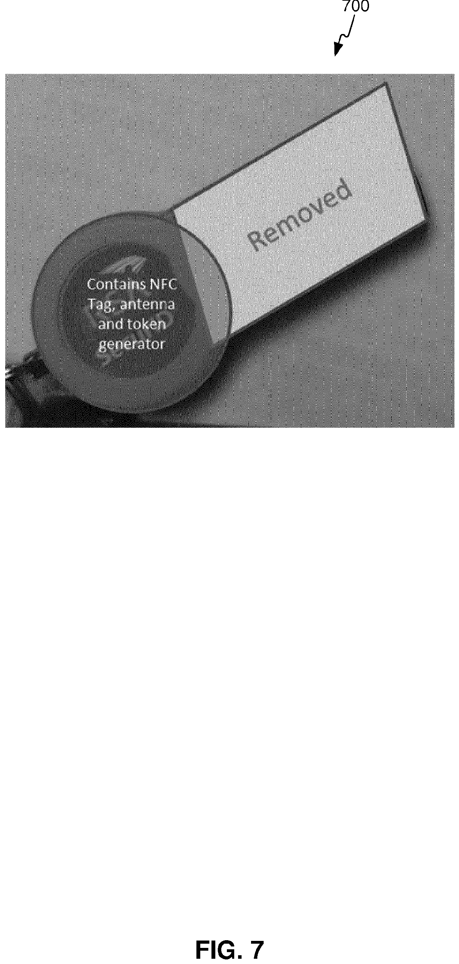

In addition to the above described embodiments, another application of NFC involves the use of NFC devices in connection with token ID tags or devices. As shown in FIG. 6, existing token ID (or secure ID) tags, such as a conventional tag 600 to provide an example, typically include a battery, a random number generator linked to an encrypted number algorithm, and an LCD display. Embodiments of this invention as shown in FIG. 7 remove the LCD display and replace the display with a NFC device coupled to the random number generator.

Existing token ID tags have a number of disadvantages. For one, they require LCD driver electronics and a power supply for the LCD display. Second, they require a long lasting battery to power the LCD display. Third, they have a relatively large form factor, thus requiring a significant amount of materials to manufacture them. Finally, there is a human error factor that cannot be discounted. The user is required to enter a number of digits (usually six, but there can be more or fewer digits required) from the display in addition to their user ID and password. The display digits typically change every 10 - 30 seconds or so (the periodicity of change may be less than 10 seconds or more than 30 seconds, depending on how the token ID tag is set, usually by the company or institution which the user wants to access.

As shown in FIG. 7, the LCD display is removed from the conventional tag 600 and is replaced by a NFC tag. Removing the LCD display has a number of advantages. For one, the display electronics are eliminated. For another, the size of the battery is substantially reduced, since it does not need to power the LCD display. Still further, the size of a token ID tag 700 is substantially reduced, since it is only required to contain a NFC tag and its associated antenna, the token number generator that is connected to the NFC tag, and a small battery that powers the token generator.

An embodiment of the invention transfers the passcode data (that is, the number generated by the number generator in the token ID tag 700)) via NFC to a commercial card reader, NFC reader, etc. The user then only inputs his/her user name and password. The random number is generated by the protocol in the token ID tag 700. The form factor of the token ID tag 700 could change to be as small as necessary or desirable, depending on the antenna size, i.e., depending on the NFC or RFID antenna requirement. Any protocol can be used, thereby allowing for varied approaches, depending on what secure system is being used. The random number generator is co-located with the NFC/RFID controller such that the information generated by the existing random number generator is aligned with the secure server. All the user has to do is present the token ID tag 700 to the reader and provide their unique login/security details. The reader then reads the number generated by the number generator in the token ID tag 700 containing the NFC tag at that time and checks it against the server's number. The two numbers should then align. The user does not have to worry about getting any of the digits wrong because the reader has read the passcode number from the token ID tag 700.

The user carries the code generator with them in a small form factor. A reader generates a magnetic field which, when the NFC tag is touched to the reader, is harvested by the NFC tag in the token ID tag 700. The field harvested by the NFC tag powers the NFC tag to enable it to transmit the code generated by the code generator connected to the NFC tag in the token ID tag 700 to the reader. The reader automatically reads the code generated by the code generator in the token ID tag 700. The user then only has to input their fixed user name and password. All the required information gets passed back to the secure server which aligns with the current user ID and the token ID that is currently being read by the reader. If the passcode and user ID match, a connection is established.

This embodiment replaces the need to type in the token ID number. The NFC reader reads the token ID number automatically from the token ID tag 700 when the token ID tag 700 is placed next to the reader. The reader is in the device that creates the secure connection to a server, a VPN, etc. The device containing the reader may be a laptop or desktop computer, a financial institution terminal, a tablet computer, or any other peripheral capable of obtaining and maintaining a secure connection. This is useful, in addition to a secure computer system access to a VPN, for banking systems, home security systems, etc. When the system is set up, the token ID tag 700 is aligned with the initialization. Over time, the token ID tag 700 should remain aligned with the main system. A reader is required to read the data from the tag. The reader can be built in to a computer or other reading device, or it can be an add-on unit that connects to the computer which then connects to the network.

An advantage of this system is that the code generated by the code generator is no longer restricted to a small number of characters (e.g., six). The token ID tag 700 can cover all RFID/NFC standards, including NFC-A, NFC-B, NFC-F, ISO14443A, ISO14443B, ISO14443B', MIFARE^{™}, FELICA^{™}, Topaz^{™} etc.

In summary, this embodiment provides ease of use on behalf of the user. More and more peripherals have NFC readers (e.g., payment terminals, laptops, mobile phones, printers, door access, etc.) incorporated in them. Not having to type in a given multi-digit number in a specific time period makes it easier for the user to establish a secure connection with his/her user ID, password, and automatically generated token ID number. Removing the LCD display, display driver electronics, and the larger battery results in a smaller form factor and a lower cost of manufacture of the token ID tag 700. In addition, the token ID tag 700 of this embodiment has a lower power requirement than the conventional tag 600.

Embodiments have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of embodiments of the present invention should not be limited by any of the above-described exemplary embodiments, but should be defined only in accordance with the following claims and their equivalents.

## Claims

1. A method for wirelessly transferring information from a portable device containing a wireless device to a second device containing a wireless device and a display, comprising:
storing in the portable device user account information comprising user identification information and a user password for use in accessing at least one of a media website account or a social networking website account together with privacy settings for at least one of a media application or a social networking application; and
sending the user account information comprising the user identification information, the user password and the privacy settings from the portable device to the second device via the wireless devices in the portable device and the second device.

2. The method of claim 1, whereby the user account information comprising the user identification information and the user password are sent to the second device when the portable device is placed in proximity with the second device.

3. The method of any preceding claim, whereby the user account information comprising the user identification information and the user password are sent to the second device to thereby enable the second device to access the at least one of the media website account or the social networking website account.

4. A method for wirelessly receiving information from a portable device, comprising:
wirelessly receiving, by a system containing a display and a wireless device, user account information and privacy settings from the portable device, the user account information comprising user identification information and a user password for use in accessing at least one of a media website account or a social networking website account together with privacy settings for at least one of a media application or a social networking application.

5. The method of claim 4, further comprising:
accessing the at least one of the media website account or the social networking website account from the system containing the display and the wireless device.

6. The method of any of claims 4 or 5, whereby the system comprises a consumer electronics, CE, device containing the display and the wireless device

7. The method of any of claims 4 to 6, further comprising:
sending, by the system containing the display and the wireless device, a request to the portable device for the user identification information and the user password.

8. The method of any of claims 4 to 7, whereby the wireless device is an NFC device (102, 104).

9. A system for wirelessly receiving information from a portable device, the system containing a display and a wireless device, the system adapted to wirelessly receive user account information and privacy settings for at least one of a media application or a social networking application from the portable device, the user account information comprising user identification information and a user password for use in accessing at least one of a media website account or a social networking website account.

10. The system of claim 9, comprising a consumer electronics, CE, device containing the display and the wireless device.

11. The system of any of claims 9 or 10, wherein the wireless device is an NFC device (102, 104).

12. The system of any of claims 9 to 11, the system adapted to send a request to the portable device for the user identification information and the user password.

13. The system of any of claims 9 to 12, the system adapted to wirelessly receive the user account information comprising the user identification information and the user password to thereby enable the system to access the at least one of the media website account or the social networking website account.

14. The system of any of claims 9 to 13, the system adapted to wirelessly receive content blocking settings from the portable device to thereby enable the system to block content from the media website or social networking website.

15. A portable device containing a wireless device for wirelessly transferring information from the portable device to a second device containing a display, the portable device adapted to store user account information comprising user identification information and a user password for use in accessing at least one of a media website account or a social networking website account together with privacy settings for at least one of a media application or a social networking application, the portable device further adapted to send the user account information comprising the user identification information and the user password together with the privacy settings to the second device via the wireless device in the portable device.

## Patentansprüche

1. Verfahren zum drahtlosen Übertragen von Informationen von einer tragbaren Vorrichtung, die eine drahtlose Vorrichtung enthält, zu einer zweiten Vorrichtung, die eine drahtlose Vorrichtung und eine Anzeige enthält, umfassend:
Speichern von Benutzerkontoinformationen in der tragbaren Vorrichtung, die Benutzeridentifikationsinformationen und ein Benutzerkennwort zur Verwendung beim Zugriff auf mindestens eines von einem Medien-Website-Konto oder einem Konto einer Soziales-Netzwerk-Website zusammen mit Datenschutzeinstellungen für mindestens eine von einer Medienanwendung oder einer Soziales-Netzwerk-Anwendung umfassen; und Senden der Benutzerkontoinformationen, die die Benutzeridentifikationsinformationen, das Benutzerkennwort und die Datenschutzeinstellungen umfassen, von der tragbaren Vorrichtung zu der zweiten Vorrichtung über die drahtlosen Vorrichtungen in der tragbaren Vorrichtung und der zweiten Vorrichtung.

2. Verfahren nach Anspruch 1, wobei die Benutzerkontoinformationen, die die Benutzeridentifikationsinformationen und das Benutzerkennwort umfassen, an die zweite Vorrichtung gesendet werden, wenn die tragbare Vorrichtung in die Nähe der zweiten Vorrichtung gebracht wird.

3. Verfahren nach einem vorhergehenden Anspruch, wobei die Benutzerkontoinformationen, die die Benutzeridentifikationsinformationen und das Benutzerkennwort umfassen, an die zweite Vorrichtung gesendet werden, um dadurch der zweiten Vorrichtung den Zugriff auf das mindestens eine von dem Medien-Website-Konto oder dem Konto einer Soziales-Netzwerk-Website zu ermöglichen.

4. Verfahren zum drahtlosen Empfangen von Informationen von einer tragbaren Vorrichtung, umfassend:
drahtloses Empfangen von Benutzerkontoinformationen und Datenschutzeinstellungen von der tragbaren Vorrichtung durch ein System, das eine Anzeige und eine drahtlose Vorrichtung enthält, wobei die Benutzerkontoinformationen Benutzeridentifikationsinformationen und ein Benutzerkennwort zur Verwendung beim Zugriff auf mindestens eines von einem Medien-Website-Konto oder einem Konto einer Soziales-Netzwerk-Website zusammen mit Datenschutzeinstellungen für mindestens eine von einer Medienanwendung oder einer Soziales-Netzwerk-Anwendung umfassen.

5. Verfahren nach Anspruch 4, ferner umfassend:
Zugriff auf mindestens eines von dem Medien-Website-Konto oder dem Konto einer Soziales-Netzwerk-Website von dem System aus, das die Anzeige und die drahtlose Vorrichtung enthält.

6. Verfahren nach einem der Ansprüche 4 oder 5, wobei das System eine Vorrichtung der Unterhaltungselektronik, CE, umfasst, die die Anzeige und die drahtlose Vorrichtung enthält.

7. Verfahren nach einem der Ansprüche 4 bis 6, ferner umfassend:
Senden, durch das System, das die Anzeige und die drahtlose Vorrichtung enthält, einer Anfrage an die tragbare Vorrichtung für die Benutzeridentifikationsinformationen und das Benutzerkennwort.

8. Verfahren nach einem der Ansprüche 4 bis 7, wobei die drahtlose Vorrichtung eine NFC-Vorrichtung (102, 104) ist.

9. System zum drahtlosen Empfangen von Informationen von einer tragbaren Vorrichtung, wobei das System eine Anzeige und eine drahtlose Vorrichtung enthält, wobei das System so ausgelegt ist, um drahtlos Benutzerkontoinformationen und Datenschutzeinstellungen für mindestens eine von einer Medienanwendung oder einer Soziales-Netzwerk-Anwendung von der tragbaren Vorrichtung zu empfangen, wobei die Benutzerkontoinformationen Benutzeridentifikationsinformationen und ein Benutzerkennwort zur Verwendung beim Zugriff auf mindestens eines von einem Medien-Website-Konto oder einem Konto einer Soziales-Netzwerk-Website umfassen.

10. System nach Anspruch 9, das eine Vorrichtung der Unterhaltungselektronik, CE, umfasst, die die Anzeige und die drahtlose Vorrichtung enthält.

11. System nach einem der Ansprüche 9 oder 10, wobei die drahtlose Vorrichtung eine NFC-Vorrichtung (102, 104) ist.

12. System nach einem der Ansprüche 9 bis 11, wobei das System so ausgelegt ist, dass es eine Anfrage an die tragbare Vorrichtung für die Benutzeridentifikationsinformationen und das Benutzerkennwort sendet.

13. System nach einem der Ansprüche 9 bis 12, wobei das System so ausgelegt ist, dass es die Benutzerkontoinformationen, die die Benutzeridentifikationsinformationen und das Benutzerkennwort umfassen, drahtlos empfängt, um dadurch dem System den Zugriff auf das mindestens eine von einem Medien-Website-Konto oder dem Konto einer Soziales-Netzwerk-Website zu ermöglichen.

14. System nach einem der Ansprüche 9 bis 13, wobei das System so ausgelegt ist, dass es drahtlos Einstellungen zum Blockieren von Inhalten von der tragbaren Vorrichtung empfängt, um dadurch dem System die Blockierung von Inhalten von der Medien-Website oder der Soziales-Netzwerk-Website zu ermöglichen.

15. Tragbare Vorrichtung, die eine drahtlose Vorrichtung zum drahtlosen Übertragen von Informationen von der tragbaren Vorrichtung zu einer zweiten Vorrichtung enthält, die eine Anzeige enthält, wobei die tragbare Vorrichtung so ausgelegt ist, um Benutzerkontoinformationen zu speichern, die Benutzeridentifikationsinformationen und ein Benutzerkennwort zur Verwendung beim Zugriff auf mindestens eines von einem Medien-Website-Konto oder einem Konto einer Soziales-Netzwerk-Website zusammen mit Datenschutzeinstellungen für mindestens eine von einer Medienanwendung oder einer Soziales-Netzwerk-Anwendung umfassen, wobei die tragbare Vorrichtung ferner so ausgelegt ist, um die Benutzerkontoinformationen, die die Benutzeridentifikationsinformationen und das Benutzerkennwort umfassen, zusammen mit den Datenschutzeinstellungen über die drahtlose Vorrichtung in der tragbaren Vorrichtung an die zweite Vorrichtung zu senden.

## Revendications

1. Procédé de transfert sans fil d'informations d'un dispositif portable contenant un dispositif sans fil vers un second dispositif contenant un dispositif sans fil et un écran, comprenant :
le stockage dans le dispositif portable d'informations de compte d'utilisateur comprenant des informations d'identification d'utilisateur et un mot de passe de l'utilisateur à utiliser pour accéder à un compte de site Web multimédia et/ou à un compte de site Web de réseau social conjointement avec des paramètres de confidentialité pour une application multimédia et/ou une application de réseau social ; et
l'envoi des informations de compte d'utilisateur comprenant les informations d'identification d'utilisateur, le mot de passe de l'utilisateur et les paramètres de confidentialité du dispositif portable au second dispositif via les dispositifs sans fil dans le dispositif portable et le second dispositif.

2. Procédé selon la revendication 1, dans lequel les informations de compte d'utilisateur comprenant les informations d'identification d'utilisateur et le mot de passe de l'utilisateur sont envoyées au second dispositif lorsque le dispositif portable est placé à proximité du second dispositif.

3. Procédé selon l'une quelconque des revendications précédentes, grâce auquel les informations du compte d'utilisateur comprenant les informations d'identification d'utilisateur et le mot de passe de l'utilisateur sont envoyées au second dispositif pour permettre ainsi au second dispositif d'accéder au compte du site Web multimédia et/ou au compte de site Web de réseau social.

4. Procédé pour recevoir sans fil des informations provenant d'un dispositif portable, comprenant :
la réception sans fil, par un système contenant un écran et un dispositif sans fil, d'informations de compte d'utilisateur et de paramètres de confidentialité provenant du dispositif portable, les informations de compte d'utilisateur comprenant des informations d'identification d'utilisateur et un mot de passe de l'utilisateur à utiliser pour accéder à un compte de site Web multimédia et/ou à un compte de site Web de réseau social conjointement avec des paramètres de confidentialité pour une application multimédia et/ou une application de réseau social.

5. Procédé selon la revendication 4, comprenant en outre :
l'accès au compte de site Web multimédia et/ou au compte de site Web de réseau social à partir du système contenant l'écran et le dispositif sans fil.

6. Procédé selon l'une quelconque des revendications 4 ou 5, grâce auquel le système comprend un dispositif électronique grand public, CE, contenant l'écran et le dispositif sans fil.

7. Procédé selon l'une quelconque des revendications 4 à 6, comprenant en outre :
l'envoi, par le système contenant l'écran et le dispositif sans fil, d'une demande au dispositif portable concernant les informations d'identification d'utilisateur et le mot de passe de l'utilisateur.

8. Procédé selon l'une quelconque des revendications 4 à 7, grâce auquel le dispositif sans fil est un dispositif NFC (102, 104).

9. Système pour recevoir sans fil des informations provenant d'un dispositif portable, le système contenant un écran et un dispositif sans fil, le système étant conçu pour recevoir sans fil des informations de compte d'utilisateur et des paramètres de confidentialité pour une application multimédia et/ou une application de réseau social à partir du dispositif portable, les informations de compte d'utilisateur comprenant des informations d'identification d'utilisateur et un mot de passe de l'utilisateur à utiliser pour accéder à un compte de site Web multimédia et/ou à un compte de site Web de réseau social.

10. Système selon la revendication 9, comprenant un dispositif électronique grand public, CE, contenant l'écran et le dispositif sans fil.

11. Système selon l'une quelconque des revendications 9 ou 10, dans lequel le dispositif sans fil est un dispositif NFC (102, 104).

12. Système selon l'une quelconque des revendications 9 à 11, le système étant conçu pour envoyer une demande au dispositif portable concernant les informations d'identification d'utilisateur et le mot de passe de l'utilisateur.

13. Système selon l'une quelconque des revendications 9 à 12, le système étant conçu pour recevoir sans fil les informations de compte d'utilisateur comprenant les informations d'identification d'utilisateur et le mot de passe de l'utilisateur pour permettre ainsi au système d'accéder au compte de site Web multimédia et/ou au compte de site Web de réseau social.

14. Système selon l'une quelconque des revendications 9 à 13, le système étant conçu pour recevoir sans fil des paramètres de blocage de contenu provenant du dispositif portable pour permettre ainsi au système de bloquer le contenu provenant du site Web multimédia ou du site Web de réseau social.

15. Dispositif portable contenant un dispositif sans fil pour transférer sans fil des informations du dispositif portable à un second dispositif contenant un écran, le dispositif portable étant conçu pour stocker des informations de compte d'utilisateur comprenant des informations d'identification d'utilisateur et un mot de passe de l'utilisateur à utiliser pour accéder à un compte de site Web multimédia et/ou à un compte de site Web de réseau social conjointement avec des paramètres de confidentialité pour une application multimédia et/ou une application de réseau social, le dispositif portable étant en outre conçu pour envoyer les informations de compte d'utilisateur comprenant les informations d'identification d'utilisateur et le mot de passe de l'utilisateur conjointement avec les paramètres de confidentialité au second dispositif via le dispositif sans fil dans le dispositif portable.
